# EUROPEAN PATENT SPECIFICATION

(11) **EP 1 512 314 B1**
(45) Date of publication and mention of the grant of the patent: **12.07.2006**
(21) Application number: 03728197.9
(22) Date of filing: 21.05.2003
(51) Int. Cl.: H05B 37/02

(54) **ARRANGEMENT FOR ACTIVATING OR DEACTIVATING A LIGHT SOURCE AND A GROUP OF LIGHT UNITS WHICH INCLUDES SUCH AN ARRANGEMENT**
ANORDNUNG ZUM AKTIVIEREN ODER DEAKTIVIEREN EINER LICHTQUELLE UND EINE SOLCHE ANORDNUNG ENTHALTENDE GRUPPE VON LICHTEINHEITEN
AGENCEMENT PERMETTANT D'ACTIVER OU DE DESACTIVER UNE SOURCE LUMINEUSE ET GROUPE D'UNITES LUMINEUSES COMPRENANT UN TEL AGENCEMENT

(30) Priority: 21.05.2002 SE 0201513
(43) Date of publication of application: 09.03.2005
(73) Proprietor: Cellux AB, 441 63 Alingsas (SE)
(72) Inventor: MANGOLD, Stephan, S-441 63 Alingsas (SE); KARRMAN, Lars, S-441 63 Alingsas (SE); HEDSTRÖM, Magnus, S-447 95 Vargarda (SE)
(74) Representative: Ekström, Nils
(86) International application number: PCT/SE2003/000819
(87) International publication number: WO 2003/098977

(56) References cited:
- PATENT ABSTRACTS OF JAPAN vol. 2, no. 114 (M-034) 21 September 1978 & JP 53 084 372 A (MATSUSHITA ELECTRIC WORLK LTD.) 25 July 1978
- DATABASE WPI Week 199419, Derwent Publications Ltd., London, GB; Class Q41, AN 1994-154353, XP002966602 & JP 6 096 865 A (MATSUDA K.K.) 08 April 1994

## Description

### TECHNICAL FIELD

The present invention relates to a device for switching a light source on and off, which light source is in a lighting unit that is designed to form part of a group of lighting units arranged along a stretch of road, track or the like, according to the preamble to Claim 1. The invention also relates to an arrangement comprising a group of lighting units, each comprising a light source and a device for switching the light source on and off. In particular, it relates to a device for the controlled regulation of the switching on and off of light sources in a group of lighting units, which device permits the controlled switching on and off of light sources in lighting units which are close to a lighting unit where a movement detector detects the presence of a moving object such as a person or a vehicle. In particular, it relates to a device for the controlled regulation of the switching on and off of light sources in a group of lighting units, which device permits the controlled switching on and off of light sources in the next and/or preceding lighting unit in relation to the lighting unit with which the movement detector is associated.

### BACKGROUND ART

At present, street lighting or electric lighting for tracks is available that is powered by energy from the normal supply network (230V). In the case of, for example, private roads or running tracks there are normally no cables run from the supply network, but for the installation of lighting, a cable must be taken from the supply network to each lamppost. If, in addition, the cable needs to run underground, the installation is expensive. However, it is normal for the cable to be suspended between the lampposts to supply the lighting with energy. In places where it is expensive to run electricity cables, solar cells can be used that supply each individual lamppost with energy for lighting. The light source can consist of white light-emitting diodes, which take very little of the solar cell energy stored in an accumulator battery and provide sufficient light for private roads or running tracks. A similar system with solar cells, accumulator battery and white light-emitting diodes for two-wheelers is described in patent no. DE 199 19 987. Devices for solar cell powered street lighting are already to be found in a number of places, but the problem is that they use energy all the time the lighting along the road or the running track is switched on. A light sensor and timer are suitably used, which can be set so that the lighting is only switched on at certain times during the night, for example between dusk and 11 p.m. and from 6 a.m. until dawn, enabling further savings to be made of the stored energy. Using a movement detector, the lighting can be switched on during the period of darkness, for example between 11 p.m. and 6 a.m. Movement detectors are described in patent no. CH 670019 and have been further developed for products on the open market. One such product is, for example, 3IN1 that contains a light sensor, clock and movement detector with a timer. This is available from Gnosjö Konstrnide AB. Patent no JP 2002056991 A relates to increasing the intensity of the light from lamps arranged along a road for a predetermined time dependent upon signals from sensors placed at intervals along the road, which sensors detect the presence of persons or vehicles. The regulation of the intensity of the light saves even more energy. The problem with currently available movement detectors and sensors is that they have too short a range. It is only approximately 10 metres and this is too short a distance to provide light when the person or vehicle is almost at the lamppost. Lighting is required such that it is possible to see the next lamppost, which must be switched on before the person or vehicle leaves the most recently switched on lamppost.

### DISCLOSURE OF INVENTION

The object of the present invention is to save energy when lighting stretches of private roads, footpaths, cycle tracks, ski tracks, running tracks or the like. When it is dark and when the movement detector detects persons or vehicles within its detection area, the electronic unit sends a signal to the lampposts in front and behind. These electronic units, that can receive signals from adjacent lampposts via a signal sensor, switch on the light on the lamppost if it is not already switched on. A timer starts and keeps the light switched on for a preset period of time, for example for two minutes. If the person or vehicle has not reached the lamppost so that the movement detector detects the person or vehicle within the preset period of time, the lighting is switched off, but if the person or vehicle approaches the lamppost that is switched on and the movement detector on this lamppost detects the person or vehicle, this electronic unit in turn sends a signal to the lampposts in front and behind. In this way, the person or vehicle has continuous light on the occupied stretch of road, cycle track, running track, ski track or the like and the system saves energy as only three lampposts are switched on at the same time.

### BRIEF DESCRIPTION OF DRAWINGS

Figure 1 shows schematically a lighting unit in side view,
Figure 2 shows schematically a group of lighting units viewed from the front,
Figure 3 shows a device for switching on and off a light source in a lighting unit according to the invention,
Figure 4 shows a signal from the timing circuit.

### MODES FOR CARRYING OUT THE INVENTION

An embodiment of the present invention will be described below where the invention is installed as lighting for a private road. According to this embodiment, the lighting consists of lampposts with white light-emitting diodes that are in groups of nine in a holder and are powered by an accumulator battery that is charged with electrical energy from solar cells. The electronic unit, based on a small microprocessor, for example a PIC16C72, consists of the functions: monitoring of charging, clock, movement detection, timer, infrared signal generation and reception and control electronics for switching on the white light-emitting diodes, with the solar panel functioning as a dusk/dawn detector. Sufficiently low output from the solar cells enables the control electronics to switch on the white light-emitting diodes.

In order to save energy, it is a requirement that the lighting should only be switched on when persons or vehicles are going along the road. The clock in the electronic unit can be used so that the light-emitting diodes are only switched on for a certain number of hours during the night. The invention relates to switching on the light-emitting diodes when persons or vehicles are travelling along the private road when it is dark and the person or vehicle is travelling outside the period of time set on the clock. When the person or vehicle moves along the road, a movement detector, which is located on the lamppost and has an electronic function incorporated in the electronic unit, registers the person or vehicle. As the movement detector has a short range, approximately 10 metres, the electronic unit sends two infrared signals, modulated at 1 kHz for less than a second, from its infrared diodes. One infrared signal is directed and transmitted towards the lamppost in front and the other infrared signal is directed and transmitted towards the lamppost behind. The electronic units in the lampposts receive the infrared signal via a photo-transistor in the same wavelength range as the infrared signal. As the infrared signal is modulated, the electronic unit can decode the signal so that spurious signals, such as reflections or other interference or infrared radiation, can be avoided. By means of a convex plastic lens in front of the photo-transistor, the infrared signal can be detected at a distance of up to 100 metres, which enables there to be a distance of 100 metres between the lampposts. If the lighting is switched off, which is determined by the electronic unit, the decoded infrared signal switches the white light-emitting diodes on and at the same time starts a timer in the electronic unit. If the white light-emitting diodes are switched on, the infrared signal causes the electronic unit to reset the timer and start it again. When the timer is activated, the white light-emitting diodes are switched on. When the preset period of time has passed, for example two minutes, the electronic unit switches off the white light-emitting diodes via the control electronics. In this way, the person or vehicle has continuous light on the private road.

When the person or vehicle approaches the lamppost that is switched on, the movement detector detects the person or vehicle and the same procedure is carried out in the electronic unit as for the previous lamppost: the next lamppost is switched on and the lamppost behind will eventually be switched off when the timer has counted down the preset time. The lighting along the road is independent of direction, so that if the person or vehicle should turn round for some reason, the lamppost behind is still switched on so that the person or vehicle is able to turn round and have light on their way back. This is achieved by the movement detector resetting the timer and starting it again via the electronic unit when the person or vehicle is in the detection area 42 of the movement detector.

The timer is always reset - and started again - by the infrared signal, both for the lamppost in front and the one behind. The reason for this is that otherwise there could be a time window in which a person or vehicle following behind does not have light.
If two persons or vehicles are moving in the same direction with a distance between them of approximately three lampposts, the infrared signal that was generated by the person or vehicle behind passing a first lamppost would be ignored, as lamppost number two has already been switched on by the infrared signal that was generated by the person or vehicle in front passing lamppost number three. This is prevented by the infrared signal always resetting the timer and starting it again, even for a lamppost that is already switched on.

For other applications where lighting is to be used, the infrared signal can control the timer in various ways that can be preset in the electronic unit. In the example described above, the infrared signal causes the timer to be reset and started again. With a different pre-setting, the infrared signal can zero the timer or let it remain unchanged.

With other applications of the lighting, it must be possible for the movement detector to switch on all the lights along the road or track. When the movement detector registers any person or vehicle, an infrared signal is transmitted to the light in front and behind. When the electronic unit registers an infrared signal, the electronic unit can be preset so that it immediately sends out an infrared signal to the light in front and behind. By this means, all the lampposts along the road or track are switched on. The timer in the electronic unit determines when the lights are to be switched off.

In order to reduce the power consumption in the electronic unit, the movement detector only functions during the night and when the clock has not switched on the light. The clock can also be deactivated so that it does not switch on the light during some part of the night, but instead the light can only be switched on by means of the movement detector and the infrared signal.

Further embodiments will be described with reference to the attached drawings.

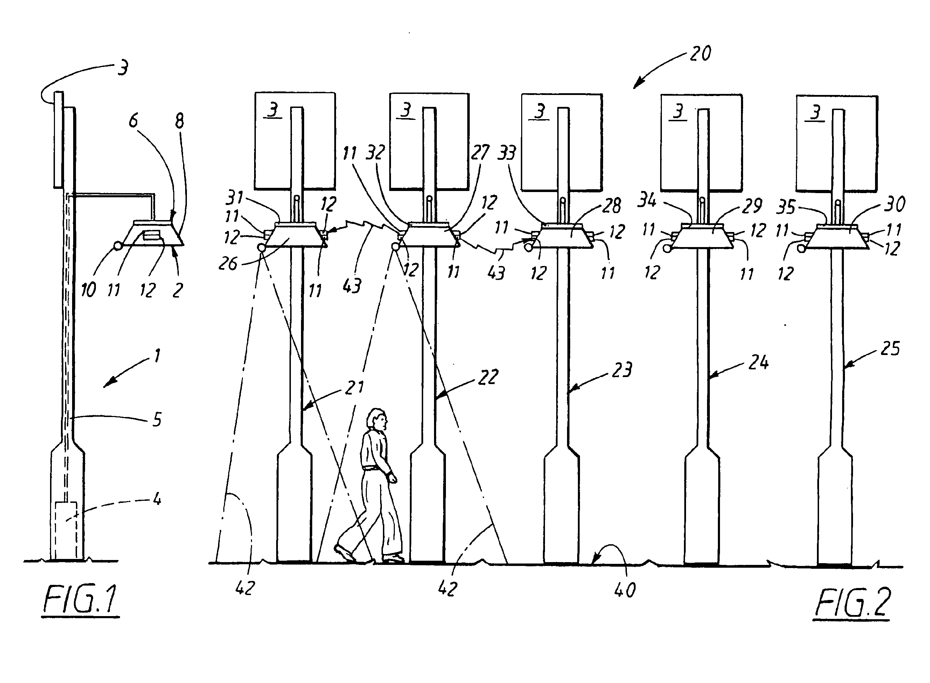

Figure 1 shows a lighting unit 1 viewed from the side. The lighting unit 1 comprises a light source 2 and a supply circuit for the light source. The supply circuit comprises preferably a solar cell panel 3 and an accumulator 4 which is charged by the current generated by the solar cell 3. The light source 2 is connected to the accumulator 4 via a device 6 arranged to switch the light source on and off.

The light source 2 and the solar cell panel 3 are preferably supported on a stand 5, preferably in the form of a lamppost. The solar cell panel can preferably be mounted essentially vertically to prevent it from being covered in snow and ice when the arrangement is used in areas with a cold winter climate.

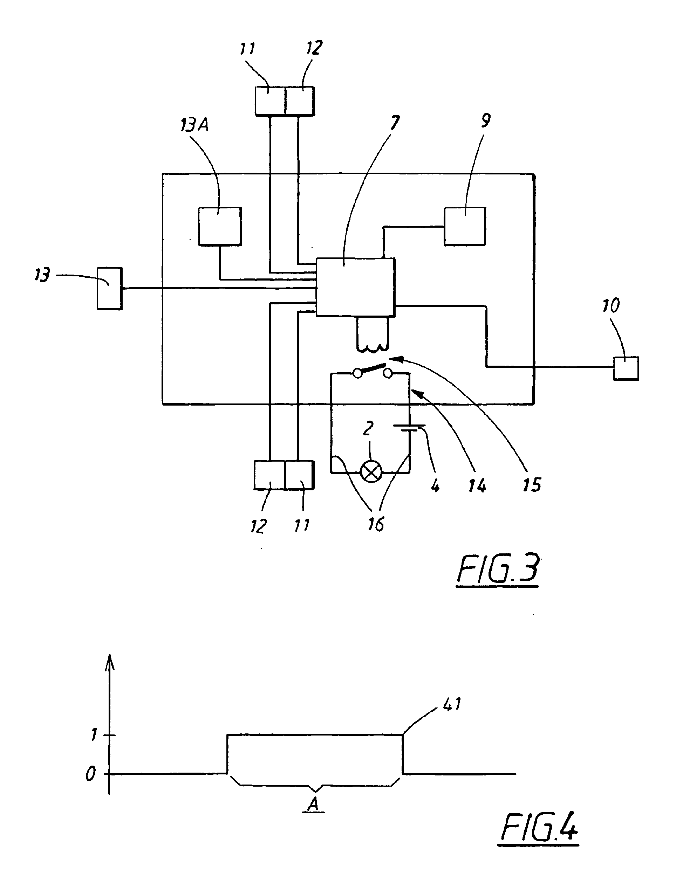

Figure 3 shows schematically the device 6 according to the invention for switching a light source on and off. The device comprises a control unit 7 which is positioned in a protected location, for example inside a casing 8 which supports the light source 2. The control unit 6 comprises a timing circuit 9 which is designed to generate signals corresponding to an activation period for the light source 2. The timing circuit consists suitably of a timer according to the embodiment described above, but can also be implemented in other ways, for example by means of a voltage across a capacitor which is discharged across a resistor being recorded and compared with a threshold value. The control unit 7 is also connected to a movement detector 10 which is arranged to detect moving objects such as persons and vehicles in its detection area and, when that occurs, to generate an activation signal.

A registered activation signal is to be sent to a device for switching a light source on and off arranged in association with a second lighting unit comprised in the said group of lighting units. For this purpose, the device 6 comprises means for transmitting 11 the said activation signal to a second device in order to switch on and off a lighting unit comprised in the said group of lighting units and means for receiving 12 an activation signal generated by another device for switching on and off a lighting unit comprised in the said group of lighting units.

The said means for transmitting an activation signal consists of a transmitter unit 11 which is connected to the control unit 7. If a presence is detected, the control unit generates a control signal whereupon the transmitter 11 generates an activation signal. The transmitter can be of the type described above.

The said means for receiving an activation signal consists of a receiver 12 which is arranged to have a signalling link to a transmitter 11 of an adjacent lighting unit. If communication is to be able to be established with both the lighting units in front and behind, the device 6 can be equipped with two pairs of transmitters/receivers 11, 12.

In addition, the device 6 can be connected to a light sensor 13 and/or a clock 13A in order to ensure that activation of the lamps only takes place at night.

The light sensor 13 consists preferably of the solar cell panel 3 which charges the accumulator 4. According to a preferred embodiment of the invention, the system is deactivated when the light sensor determines that it is daytime, which means that the light sources 2 are not switched on.

The clock 13A can be used as described above to define an interval of time corresponding to evening when the light sources are switched on continually providing that the light sensor indicates that it is dark, and also to define a period of time corresponding to night when the light sources are activated via the movement sensor.

The device 6 also comprises an activation circuit 14 the light source 2 that is associated with the device. The activation circuit can consist of a relay or transistor 15 which closes the supply circuit 16 of the light source 2. The control unit 7 is arranged to close the supply circuit when an activation signal is received from the receiver 12.

Upon the reception of the activation signal, the timing circuit 9 is activated for a particular period of time. When that occurs, the control unit 7 is arranged to ensure that the supply circuit is closed for the said period of time.

When the device 6 is connected to a light sensor 13, the control unit can be arranged to control the activation circuit provided that the light sensor indicates that it is dark. When the device 6 is connected to a clock 13A, the control unit can be arranged to control the activation circuit provided that the clock indicates that it is part of the night.

The device 6 switches the light source 2 on and off in accordance with the following pattern:

When the movement detector 10 in a first unit detects a moving object within its detection area, the means for transmitting 11 communicates with the device 6' of the next unit via the receiving unit 12' of this device. The timing circuit 9' in the next device 6' is thereafter activated. If the next unit's relay or transistor 15' is open and the next unit's light source is switched off, an activation period is started for the next unit's light source 2'. The activation period can be started immediately after the reception of the signal from the first unit's movement detector 10, or alternatively the activation period can be started after a particular interval of time. Thereafter, the next light source remains switched on during the activation period.

If the next unit's relay or transistor 15' is closed and the next unit's light source is switched on, depending upon the embodiment, the activation period can either be restarted, which is preferable, whereupon the time that the light source is switched on is extended by the activation period, or the activation period can continue, whereupon in this case the signal from the movement detector of the first unit does not affect the length of the period of illumination.

In addition to ensuring that the means for transmitting 11 sends a "start up" signal to the next unit, the device 6 ensures that the light source 2 that belongs to the device is switched on when the movement detector 10 detects the presence of a moving object within its detection area. The relay or transistor 15 of the first unit is closed in the event of a detection, whereupon the lamp is switched on. The time of activation of the first unit can be designed in a plurality of ways. According to a first embodiment, the light source is started when the movement detector first detects the moving object. After the detection, the timing circuit 9 determines an activation period during which the light source is switched on. Thereafter re-activation is made possible. The light source then remains switched on for an activation period, regardless of how long the moving object remains within the detection area.
According to a second embodiment, the light source is started when the movement detector first detects the moving object. After the detection, the timing circuit 9 restarts an activation period so long as the moving object is within the detection area of the movement detector. The light source then remains switched on for a period of time corresponding to an activation period plus the time that the moving object is within the detection area. According to a third embodiment, the relay or transistor 15 is closed, whereupon the light source is switched on, as soon as the movement detector detects a moving object. According to this embodiment, the timing circuit 9 is not activated until the object leaves the detection area. The light source then remains switched on for a period of time corresponding to an activation period plus the time that the moving object is within the detection are.

Figure 2 shows an arrangement 20 comprising a group of lighting units 21 - 25 arranged in a consecutive series, where each of the lighting units comprises a light source 26 - 30 and a device 31 - 35 for switching a lighting unit on and off.

The example shows that a pedestrian is positioned by the second lighting unit from the left, which is indicated by the reference numeral 22. The pedestrian is detected by the movement detector 36, whereupon an activation signal 43 is generated and transmitted via the device 6 for switching the lighting unit 22 on and off. The activation signal 43 is received by the lighting units 21, 23 in front and behind, whereupon these light sources 26, 28 are switched on if the conditions for switching on are fulfilled.

According to one embodiment of the invention, it is possible for the switching on of the light sources only to take place in one direction. In this case, only one pair of transmitter and receiver is required. In this respect, the means for transmitting an activation signal arranged in the device is arranged to transmit the activation signal 43 to the next lighting unit in a consecutive series of lighting units.

The transmitters and receivers described can be arranged to communicate using different forms of communication channels such as via wireless communication, weak current cable, modulated signal over power cable or fibre optic cable.

With two pairs of transmitters and receivers, the means for transmitting an activation signal can be arranged also to transmit the activation signal to the preceding lighting unit in a consecutive series of lighting units. The consecutive series of lighting units can be arranged along a stretch of road or track of any shape. However, the lighting units must always have a signalling link to each other and preferably be positioned in such a way that the next and preceding lighting units are within sight of an intermediate lighting unit.

Figure 4 shows a signal 41 from the timing circuit 9. The signal 41 has the value 1 during the period of time corresponding to an activation period A.

The invention is not limited to the embodiments described above, but can be varied freely within the framework of the following patent claims. In general, the invention relates to a device for switching lighting on and off along a stretch of road, track or the like, comprising a light detector/solar cell panel, a timer and a movement detector which during the night detects one or more persons or vehicles within its detection area and thereupon transmits a signal - either by wireless means (infrared or radio waves) or via cable (weak current or overlaid on the power transmission) - to the lighting unit in front and behind, which lighting unit can be white light-emitting diodes, incandescent lamps or some other form of light source, so that only a part of the illuminated stretches 40 of the private road, footpath, cycle track, running track, ski track or the like is switched on, with the aim of saving energy.

## Claims

1. A device (6) for switching on and off a light source (2) in a lighting unit (1) that is designed to form part of a group of lighting units (21 - 25) arranged along a stretch of road, track or the like, whereby said device comprises a timing circuit (9) designed to generate a signal (41) corresponding to an activation period (A) for a light source (2) comprised in the lighting unit (1) and a movement detector (10) which is arranged to detect moving objects such as persons and vehicles in its detection area (42) and, when said moving objects are detected by said movement detector, to generate an activation signal (43), **characterized in that** the device (6) comprises means for transmitting (11) the said activation signal (43) to a device (31 - 35) for switching on and off a light source arranged in another lighting unit (21 - 25) comprised in the said group of lighting units and means for receiving (12) an activation signal generated by a device (31 - 35) for switching on and off a light source arranged in another lighting unit (21 - 25) comprised in the said group of lighting units.

2. A device as claimed in claim 1, **characterized in that** the device (6) is arranged, upon the reception of the said activation signal (43), to switch on the light source (2) and start the said activation period (A), if the light source is switched off.

3. A device as claimed in claim 2, **characterized in that** the device (6) is arranged, upon the reception of the said activation signal (43), to restart the said activation period (A), if the light source (2) is already switched on.

4. A device as claimed in claim 2, **characterized in that** the device (6) is arranged, upon the reception of the said activation signal (43), to disregard the said activation signal (43) and to continue the current activation period (A), if the light source (2) is already switched on.

5. A device as claimed in any one of claims 1 - 4, **characterized in that** the said means for transmitting (11) the said activation signal comprises a wireless communication channel.

6. A device as claimed in any one of claims 1 - 4, **characterized in that** the said means for transmitting (11) the said activation signal comprises a communication channel consisting of a weak current cable which is arranged to interconnect all the lighting units comprised in the said group.

7. A device as claimed in any one of claims 1 - 4, **characterized in that** the said means for transmitting (11) the said activation signal comprises a communication channel consisting of a power cable which is arranged to supply the light sources in all the lighting units comprised in the said group and **in that** the said means for transmitting comprises means for overlaying the said activation signal on an operating voltage on the said power cable.

8. A device as claimed in any one of claims 1 - 4, **characterized in that** the said means for transmitting (11) the said activation signal comprises a communication channel consisting of a fibre optic cable.

9. A device as claimed in any one of the preceding claims, **characterized in that**, depending upon a control signal from a light detector (13), the device (6) is arranged to be put into an active mode, in which a light source (2) connected to the device in a lighting unit associated with the device (6) is arranged to be switched on upon the reception of an activation signal (43), and a passive mode, in which a device (6) is arranged to inhibit the switching on of the light source.

10. A device as claimed in claim 9, **characterized in that** the said light detector (13) consists of a solar cell panel (3) which constitutes the energy source of the device.

11. An arrangement comprising a group of lighting units (21 - 25) arranged in a consecutive series, where each of the lighting units comprises a light source (26 - 30) and a device (31 - 35) for switching on and off a lighting unit according to any one of claims 1 - 10.

12. An arrangement according to Claim 11, **characterized in that** the means for transmitting (11) an activation signal (43) comprised in the said devices (31 - 35) are arranged to transmit the activation signal to the next lighting unit in the said consecutive series of lighting units (21 - 25).

13. An arrangement according to Claim 12, **characterized in that** the means for transmitting (11) an activation signal comprised in the said devices (31 - 35) is arranged to transmit the activation signal (43) to the preceding lighting unit in the said consecutive series of lighting units (21 - 25).

## Patentansprüche

1. Vorrichtung zum Ein- und Ausschalten einer Lichtquelle (2) in einer Beleuchtungseinheit (1), welche Bestandteil einer Gruppe von Beleuchtungseinheiten (21 bis 25) entlang eines Abschnitts einer Straße, Schiene oder dergleichen ist, wobei die Vorrichtung eine Zeitgeberschaltung (9) zum Erzeugen eines Signals (41) entsprechend einer Aktivierungsperiode (A) für eine Lichtquelle (2), die in der Beleuchtungseinheit (1) enthalten ist, sowie einen Bewegungsdetektor (10) zum Erfassen beweglicher Objekte, wie zum Beispiel Personen in ihrem Erfassungsbereich (42), und, wenn die beweglichen Objekte von dem Bewegungsdetektor erfasst sind, zum Erzeugen eines Aktivierungssignals (43), aufweist, **dadurch gekennzeichnet, dass** die Vorrichtung (6) eine Einrichtung zum Übertragen (11) des Aktivierungssignals (43) an eine Vorrichtung (31-35) zum Ein- und Ausschalten einer Lichtquelle, die in einer weiteren Beleuchtungseinheit (21) innerhalb der Gruppe von Beleuchtungseinheiten angeordnet ist, sowie eine Einrichtung zum Empfangen (12) eines Aktivierungssignals, das von einer Vorrichtung (31-35) zum Ein- und Ausschalten einer Lichtquelle, die in einer weiteren Beleuchtungseinheit (21-25) innerhalb der Gruppe von Beleuchtungseinheiten enthalten ist, aufweist.

2. Vorrichtung nach Anspruch 1, **dadurch gekennzeichnet, dass** die Vorrichtung (6) derart gestaltet ist, dass sie beim Empfang des Aktivierungssignals (43) die Lichtquelle (2) einschaltet und die Aktivierungsperiode (A) startet, falls die Lichtquelle ausgeschaltet ist.

3. Vorrichtung nach Anspruch 2, **dadurch gekennzeichnet, dass** die Vorrichtung (6) derart gestaltet ist, dass sie beim Empfang des Aktivierungssignals (43) die Aktivierungsperiode (A) erneut startet, falls die Lichtquelle (2) bereits eingeschaltet ist.

4. Vorrichtung nach Anspruch 2, **dadurch gekennzeichnet, dass** die Vorrichtung (6) derart gestaltet ist, dass sie beim Empfang des Aktivierungssignals (43) das Aktivierungssignal (43) verwirft und die laufende Aktivierungsperiode (A) fortsetzt, falls die Lichtquelle (2) bereits eingeschaltet ist.

5. Vorrichtung nach einem der Ansprüche 1 bis 4, **dadurch gekennzeichnet, dass** die Einrichtung (11) zum Übertragen des Aktivierungssignals einen drahtlosen Kommunikationskanal umfasst.

6. Vorrichtung nach einem der Ansprüche 1 bis 4, **dadurch gekennzeichnet, dass** die Einrichtung (11) zum Übertragen des Aktivierungssignals einen Kommunikationskanal bestehend aus einem Schwachstromkabel aufweist, das eingerichtet ist, alle Beleuchtungseinheiten innerhalb der Gruppe zu verbinden.

7. Vorrichtung nach einem der Ansprüche 1 bis 4, **dadurch gekennzeichnet, dass** die Einrichtung (11) zum Übertragen des Aktivierungssignals einen Kommunikationskanal bestehend aus einem Leistungskabel aufweist, welches zum Versorgen der Lichtquellen in allen Beleuchtungseinheiten innerhalb der Gruppe eingerichtet ist, und dass die Einrichtung zum Übertragen eine Einrichtung zum Überlagern des Aktivierungssignals auf eine Betriebsspannung auf dem Leistungskabel aufweist.

8. Vorrichtung nach einem der Ansprüche 1 bis 4, **dadurch gekennzeichnet, dass** die Einrichtung zum Übertragen des Aktivierungssignals einen Kommunikationskanal bestehend aus einem faseroptischen Kabel aufweist.

9. Vorrichtung nach einem der vorigen Ansprüche, **dadurch gekennzeichnet, dass** die Vorrichtung (6) in Abhängigkeit von einem Steuersignal von einem Lichtdetektor (13) in einen Aktivmodus versetzbar ist, in welchem eine Lichtquelle (2), die mit der Vorrichtung verbunden ist, in einer Beleuchtungseinheit, die der Vorrichtung (6) zugeordnet ist, einschaltbar bei Empfang eines Aktivierungssignals (43) ist, sowie in einen Passivmodus, in dem die Vorrichtung (6) zum Verhindern des Einschaltens der Lichtquelle eingerichtet ist.

10. Vorrichtung nach Anspruch 9, **dadurch gekennzeichnet, dass** der Lichtdetektor (13) aus einem Solarzellenpaneel (3) besteht, welches die Energiequelle der Vorrichtung bildet.

11. Anordnung mit einer Gruppe von Beleuchtungseinheiten (21 bis 25), angeordnet in aufeinanderfolgender Reihe, wobei jede der Lichteinheiten eine Lichtquelle (26-30) und eine Vorrichtung (31-35) zum Ein- und Ausschalten einer Beleuchtungseinheit gemäß einem der Ansprüche 1 bis 10 aufweist.

12. Anordnung nach Anspruch 11, **dadurch gekennzeichnet, dass** die Einrichtungen (11) zum Übertragen eines Aktivierungssignals (43) innerhalb der Vorrichtungen (31-35) eingerichtet sind zum Übertragen des Aktivierungssignals an die nächste Beleuchtungseinheit in der aufeinanderfolgenden Reihe von Beleuchtungseinheiten (21-25).

13. Anordnung nach Anspruch 12, **dadurch gekennzeichnet, dass** die Einrichtung zum Übertragen (11) eines Aktivierungssignals innerhalb der Vorrichtungen (31-35) eingerichtet ist zum Übertragen des Aktivierungssignals(43) an die vorhergehende Beleuchtungseinheit in der aufeinanderfolgenden Reihe von Beleuchtungseinheiten (21-25).

## Revendications

1. Dispositif (6) pour allumer et éteindre une source de lumière (2) d'une unité d'éclairage (1) qui est conçue pour former une partie d'un groupe d'unités d'éclairage (21, 25) agencé le long d'une section de route, de voie ou analogue, dans lequel ledit dispositif comporte un circuit de minutage (9) conçu pour générer un signal (41) correspondant à une période d'activation (A) pour une source de lumière (2) incluse dans l'unité d'éclairage (1) et un détecteur de mouvement (10) qui est conçu pour détecter des objets mobiles tels que des personnes et des véhicules dans sa zone de détection (42) et, lorsque lesdits objets mobiles sont détectés par ledit détecteur de mouvement, pour générer un signal d'activation (43), **caractérisé en ce que** le dispositif (6) comporte des moyens de transmission (11) dudit signal d'activation (43) à un dispositif (31-35) pour allumer et éteindre une source de lumière agencée dans une autre unité d'éclairage (21, 25) incluse dans ledit groupe d'unités d'éclairage, et des moyens pour recevoir (12) un signal de génération généré par un dispositif (31-35) pour allumer et éteindre une source de lumière agencée dans une autre unité d'éclairage (21, 25) incluse dans ledit groupe d'unités d'éclairage.

2. Dispositif selon la revendication 1, **caractérisé en ce que** le dispositif (6) est conçu, lors de la réception dudit signal d'activation (43), pour allumer la source de lumière (2) et déclencher ladite période d'activation (A), si la source de lumière est éteinte.

3. Dispositif selon la revendication 2, **caractérisé en ce que** le dispositif (6) est conçu, lors de la réception dudit signal d'activation (43), pour redéclencher ladite période d'activation (A), si la source de lumière (2) est déjà allumée.

4. Dispositif selon la revendication 2, **caractérisé en ce que** le dispositif (6) est conçu, lors de la réception dudit signal d'activation (43), pour ne pas tenir compte dudit signal d'activation (43) et poursuivre la période d'activation courante (A), si la source de lumière (2) est déjà allumée.

5. Dispositif selon l'une quelconque des revendications 1 à 4, **caractérisé en ce que** lesdits moyens de transmission (11) dudit signal d'activation comportent un canal de communications sans fil.

6. Dispositif selon l'une quelconque des revendications 1 à 4, **caractérisé en ce que** lesdits moyens de transmission (11) dudit signal d'activation comportent un canal de communications constitué d'un câble de courant à basse tension qui est agencé pour interconnecter toutes les unités d'éclairage incluses dans ledit groupe.

7. Dispositif selon l'une quelconque des revendications 1 à 4, **caractérisé en ce que** lesdits moyens de transmission (11) dudit signal d'activation comportent un canal de communications constitué d'un câble de transport d'énergie qui est agencé pour alimenter des sources de lumière dans toutes les unités d'éclairage incluses dans ledit groupe et **en ce que** lesdits moyens de transmission comportent des moyens pour superposer ledit signal d'activation sur une tension de fonctionnement sur ledit câble de transport d'énergie.

8. Dispositif selon l'une quelconque des revendications 1 à 4, **caractérisé en ce que** lesdits moyens de transmission (11) dudit signal d'activation comportent un canal de communications constitué d'un câble à fibre optique.

9. Dispositif selon l'une quelconque des revendications précédentes, **caractérisé en ce que**, en fonction d'un signal de commande provenant d'un détecteur de lumière (13), le dispositif (6) est conçu pour entrer dans un mode actif, dans lequel une source de lumière (2) connectée au dispositif d'une unité d'éclairage associée au dispositif (6) est conçue pour être allumée lors de la réception d'un signal d'activation (43), et dans un mode passif, dans lequel un dispositif (6) est conçu pour inhiber l'allumage de la source de lumière.

10. Dispositif selon la revendication 9, **caractérisé en ce que** ledit détecteur de lumière (13) est constitué d'un panneau solaire (3) qui constitue la source d'énergie du dispositif.

11. Agencement comportant un groupe d'unités d'éclairage (21-25) agencées selon une série consécutive, chacune des unités d'éclairage comportant une source de lumière (26-30) et un dispositif (31-35) pour allumer et éteindre une unité d'éclairage selon l'une quelconque des revendications 1 à 10.

12. Agencement selon la revendication 11, **caractérisé en ce que** les moyens de transmission (11) d'un signal d'activation (43) inclus dans lesdits dispositifs (31-35) sont conçus pour transmettre le signal d'activation à l'unité d'éclairage suivante de ladite série consécutive d'unités d'éclairage (21-25).

13. Agencement selon la revendication 12, **caractérisé en ce que** les moyens de transmission (11) d'un signal d'activation inclus dans lesdits dispositifs (31-35) sont conçus pour transmettre le signal d'activation (43) à l'unité d'éclairage précédente de ladite série consécutive d'unités d'éclairage (21-25).
